# EUROPÄISCHE PATENTSCHRIFT

(11) **EP 0 862 247 B1**
(45) Veröffentlichungstag und Bekanntmachung des Hinweises auf die Patenterteilung: **22.11.2006**
(21) Anmeldenummer: 98101928.4
(22) Anmeldetag: 04.02.1998
(51) Int. Cl.: H01R 25/14, H02G 5/04, H02B 1/20

(54) **Sammelschienensystem**
Bus bar system
Système de barres conductrices

(30) Priorität: 17.02.1997 DE 19706100
(43) Veröffentlichungstag der Anmeldung: 02.09.1998
(73) Patentinhaber: SIEMENS AKTIENGESELLSCHAFT, 80333 München (DE)
(72) Erfinder: Hussong, Wolfgang, Dipl. Ing., 91080 Uttenreuth (DE)

(56) Entgegenhaltungen:
- WO-A-93/19506
- DE-A- 3 709 227
- DE-A- 4 446 601
- GB-A- 2 166 914
- US-A- 4 316 234

## Beschreibung

Gegenstand der Erfindung ist ein Verbraucherabzweig für ein Sammelschienensystem zum Anschluß einer Anzahl von elektrischen Geräten, insbesondere von Niederspannungsschaltgeräten, mit einem Trägerprofil mit einem kanalartigen Kammersystem zur Aufnahme einer Anzahl von Leiterschienen.

In einer besonders vorteilhaften Ausgestaltung des Sammelschienensystems ist dieses als integriertes Sammelschienensytem sowohl für die Energie- oder Leistungsübertragung als auch für die Übertragung einer für die elektrischen Geräte erforderlichen Hilfsenergie als auch für die Kommunikation oder Steuersignalübertragung ausgebildet. Dazu weist das Kammersystem eine Anzahl von ersten Kammern zur Aufnahme von ersten Leiterschienen zur Energieübertragung und eine Anzahl von zweiten Kammern zur Aufnahme von zweiten Leiterschienen zur Hilfsenergieübertragung sowie eine dritte Kammer zur Aufnahme eines Leiterelements zur Kommunikationsübertragung auf. Dabei sind die Kammern des Kammersystems zweckmäßigerweise nebeneinander angeordnet, so daß ein auf das integrierte Sammelschienensystem aufgestecktes elektrisches Gerät mit dessen Kontaktierung gleichzeitig sowohl die Energie- und Hilfsenergieübertragung als auch die Kommunikationsübertragung erfaßt.

Ferner wird auf DE 37 09 227 A1 verwiesen, das eine Verteileranordnung zeigt, die aus zwei Typen von Bauteilen aufgebaut ist: einer oder mehreren Grundplatten und Steckmodulen. Die Grundplatte enthält die Stromschienen, die isoliert angeordnet sind. Sie ist gleichzeitig das mechanische Trägerelement für das gesamte System. Die Verbindung zwischen den Stromschienen und den Steckmoduln wird über Steckerverbindungen hergestellt. Das Steckmodul weist eine Modulgrundplatte auf. Darauf sind alle für den Motorabgang erforderlichen Elemente, nämlich Sicherung, Hauptschütz, Hilfsschütz und Bimetallauslöser montiert. Das Steckmodul bildet einen vorgefertigten Bauteil. Das Steckmodul ist mit einer Isolierstoffkapselung nach Schutzart IP54 versehen. Auf der Rückseite weist das Steckmodul einen Doppelstecker auf. Dieser Doppelstecker besteht aus einem Steuerkreis-Stecker und einem Leistungs-Stecker.

Bezüglich des elektrischen Gerätes, das im folgenden als Verbraucherabzweig bezeichnet wird, ist efindungsgemäß sowohl ein mit Kontakten zur Energieübertragung verbundenes Leistungsteil als auch ein mit Kontakten zur Hilfsenergie- und Kommunikationsübertragung verbundenes Steuerteil innerhalb desselben Abzweiggehäuses vorgesehen. Dabei ist das Leistungsteil mit den ersten Leiterschienen und das Steuerteil sowohl mit den zweiten Leiterschienen als auch mit dem Leiterelement des Sammelschienensystems kontaktierbar.

Das den Leistungsteil des Verbraucherabzweigs steuernde Steuerteil steht zweckmäßigerweise über eine interne Datenleitung mit dem Leistungsteil in Verbindung. Ein mit dem Steuerteil über eine weitere interne Datenleitung in Verbindung stehendes und ebenfalls innerhalb des Abzweiggehäuses vorgesehenes Bedienteil für den Leistungsteil enthält funktional z. B. den mechanischen Teil eines Leistungsschalters, dessen Kontaktelementfunktion dann im Leistungsteil realisiert ist.

Über die internen Datenverbindungen steuert das Steuerteil in Abhängigkeit der vom Bedienteil empfangenen Signale oder Daten und/oder anhand von externen Steuersignalen das Leistungsteil. Die externen Steuersignale werden z.B. von einer übergeordneten oder überlagerten Steuerung (SIMATIC) vorgegeben und dem Steuerteil über das in das Sammelschienensystem integrierte Leiterelement zur Kommunikationsübertragung zugeführt. Über diese Kommunikationsverbindung erfolgt z.B. auch eine Signal- oder Datenübertragung für Rückmeldungen vom Verbraucherabzweig zur übergeordneten Steuerung sowie zur Signalübertragung zwischen verschiedenen Verbraucherabzweigen.

Des weiteren werden über die interne Datenverbindung auch Rückmeldungen vom Leistungsteil an das Steuerteil übertragen, das diese verarbeitet und daraus weitere Steuerbefehle für das Leistungsteil oder Rückmeldungen an das übergeordnete Steuersystem ableitet. Das Steuerteil verarbeitet ferner diesem über eine ausgangsseitige Signalschnittstelle zugeführte Rückmeldungen von einem untergeordneten Verbrauchersystem, das an einen Leistungsabgang des Verbraucheabzweigs z.B.zu einem Motor anschließbar ist.

Zum Zuführen von Steuerspannungen zum Leistungsteil und/oder zum Bedienteil sind diese über Steuerleitungen mit der Kontaktierung des Verbraucherabzweigs zu den zur Hilfsenergieübertragung dienenden zweiten Leiterschienen des Sammelschienensystems verbunden.

Das elektrische Gerät ist somit vorteilhafterweise als kommunikationsfähiger integrierter Verbraucherabzweig ausgebildet. Dieser kann in der Art eines Hybridbausteins ausgestaltet und in hohem Maße vorgefertigt sein, wobei die Funktionalität z.B. eines Leistungsschalters im Leistungsteil realisiert ist, während im Steuerteil die Funktionalität z.B. eines Schützes enthalten ist. Der Anschluß an einen Verbraucher, z.B. an einen Motor oder an eine Heizung, erfolgt über einen Steck- oder Klemmkontakt am Leistungsabgang des Verbraucherabzweigs. An der Oberseite des Abzweiggehäuses können Bedienelemente und/oder Anzeigen vorgesehen sein, die mit dem Bedienteil verbunden sind.

Aufgrund des dadurch erreichbaren hohen Vorfertigungsgrads entfallen aufwendige Anschluß- und Montagearbeiten vor Ort, da das mit den gewünschten elektronischen und/oder elektromechanischen Komponenten bereits bestückte Abzweiggehäuse des elektrischen Gerätes lediglich auf das Sammelschienensystem aufgesteckt und der Anschluß zum Verbraucher hergestellt werden muß. Dabei können verschiedene Varianten von elektrischen Geräten oder Verbraucherabzweigen realisiert werden, wie z.B. Starter, Wendeschaltungen oder Frequenzumrichter. Auch lassen sich Sicherungen oder Schaltstücke zur sicheren Trennung im Servicefall integrieren. Darüber hinaus kann das Gehäuse auch als Kühlkörper zur Wärmeabführung ausgebildet sein.

Ein Ausführungsbeispiel der Erfindung wird anhand einer Zeichnung näher erläutert. Darin zeigen:
- FIG 1: in perspektivischer Darstellung einen integrierten Verbraucherabzeig eines Sammelschienensystems und
- FIG 2: ein Prinzipschaltbild des Verbraucherabzweigs gemäß FIG 1.

Einander entsprechende Teile sind in beiden Figuren mit den gleichen Bezugszeichen versehen.

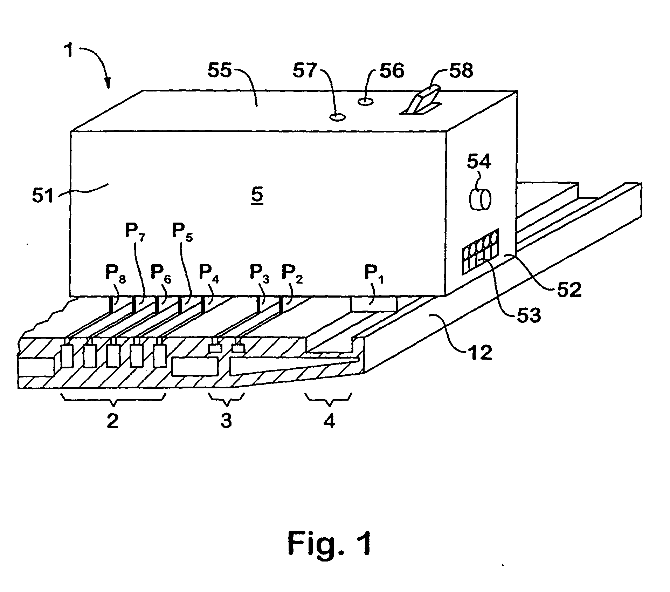

Das integrierte Sammelschienensystem 1 gemäß FIG 1 umfaßt eine Anzahl von in einem Kammersystem 12 nebeneinander angeordneten und zueinander parallel verlaufenden Sammelschienen 2, 3 und 4, auf die ein Verbraucherabzweig 5 aufsteckbar ist. Dazu sind auf der Unter- oder Bodenseite eines Abzweiggehäuses 51 des Verbraucherabzweigs 8 Kontaktstellen P₁ bis P₈ vorgesehen, über die der integrierte Verbraucherabzweig 5 mit Energie und Hilfsenergie sowie mit Steuer- und Meldesignalen versorgt wird. Dabei erfolgt die Steuer- und Meldesignalübertragung über den Kontaktanschluß P₁, der als Kommunikationsanschluß dient. Die Hilfsenergieübertragung mit z.B. einer Gleichspannung von 24V DC erfolgt über die Kontaktanschlüsse P₂ und P₃. Zur Energieübertragung dienen die Kontaktanschlüsse P₄ bis P₈, über die ein Anschluß z.B. an ein dreiphasiges Drehstromnetz mit den Leitern L1, L2, L3, N und PE für eine Wechselspannung von z.B. 400V AC erfolgt.

Der Verbraucherabzweig 5 weist an einer der parallel zu den Sammelschienen 2, 3 und 4 verlaufenden Seitenfläche 52 des Abzweiggehäuses 51 einen Leistungsabgangsstecker oder eine Leistungsabgangsklemme 53 sowie einen Signalanschluß oder eine Signalschnittstelle 54 auf. Auf der den Kontaktanschlüssen P₁ bis P₈ gegenüberliegenden Oberseite 55 des Abzweiggehäuses 51 ist ein Bedienfeld mit Anzeigeelementen 56 und 57, z.B. mit zwei Leuchtdioden (LED), sowie mit einem Schalter 58 vorgesehen. Der Verbraucherabzweig 5 ist somit in ein einzelnes Abzweiggehäuse 51 integriert, das in der Art einer "Black Box" den gesamten Verbraucherabzweig 5, vorzugsweise in Form eines Hybridbausteins, funktional enthält.

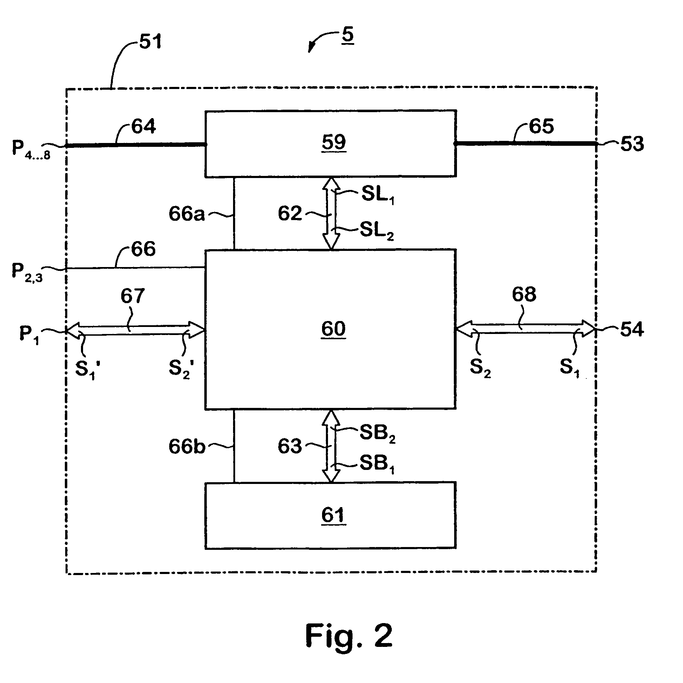

Den Aufbau des Verbraucherabzweigs 5 zeigt FIG 2 in einem Prinzipschaltbild. Der Verbraucherabzweig 5 umfaßt innerhalb des Abzweiggehäuses 51 als funktionale Bestandteile ein Leistungsteil 59 und ein Steuerteil 60 sowie ein Bedienteil 61. Das Leistungsteil 59 und das Steuerteil 60 kommunizieren untereinander über eine bidirektionale Daten- oder Signalverbindung 62. Analog kommuniziert das Steuerteil 60 über eine bidirektionale Daten- oder Signalverbindung 63 mit dem Bedienteil 61. Die Energieübertragung von der Sammelschiene 2 auf das Leistungsteil 59 erfolgt über eine Leistungszuführung 64. Ein Leistungsabgang 65 des Leistungsteils 59 führt in die Leistungsabgangsklemme 53 des Abzweiggehäuses 51.

Analog erfolgt die Hilfsenergieübertragung von der Sammelschiene 3 zum Steuerteil 60 über eine an die Kontaktanschlüsse P₂ und P₃ geführte Hilfsenergiezuführung 66. Diese ist zweckmäßigerweise vom Steuerteil 60 einerseits über einen Abzweig 66a zum Leistungsteil 59 und andererseits über einen Abzweig 66b zum Bedienteil 61 weitergeführt, so daß die Hilfsenergie als Steuerspannung auch dort jeweils zur Verfügung steht. Die Kommunikationsübertragung zum Steuerteil 60 erfolgt über einen bidirektionalen internen Kommunikations- oder Signalbus 67, der an den Kontaktanschluß P₁ des Abzweiggehäuses 51 geführt ist.

Die Zuführungen 64, 66 und 67 erfolgen auf der Sammelschienenseite, wobei die Kommunikationsübertragung über den Kontaktanschluß P₁ von und zu einem übergeordneten Steuersystem, z.B. einer SIMATIC, erfolgt. Verbraucherseitig weist der Verbraucherabzweig 5 zusätzlich zum Leistungsabgang 65 einen an die Signalschnittstelle 54 geführten internen bidirektionalen Signal- oder Datenbus 68 auf, der mit dem Steuerteil 60 verbunden ist. Der Signalbus 68 dient als Signalschnittstelle zum (nicht dargestellten) Verbraucher, z.B. zu einem Motor, zu einer Beleuchtung oder zu einer Heizung, und somit zur Übertragung von Steuersignalen S₁ zum Verbraucher. Vom Verbraucher erzeugte Rückmeldungen S₂, z.B. Temperaturmeßdaten oder ein Endschaltersignal, werden über diesen internen Signalbus 68 an das Steuerteil 60 übertragen. Analog werden über den internen Datenbus 67 Steuersignale S'₁ von der übergeordneten Steuerung an das Steuerteil 60 übertragen. Auch werden über diesen internen Datenbus 67 Rückmeldungen S'₂ vom Steuerteil 60 an das übergeordnete Steuersystem oder an weitere Verbraucherabzweige übertragen.

Über die interne Datenverbindung 63 sendet das Steuerteil 60 Steuersignale SB₁ zum Bedienteil 61 und empfängt Rückmeldungen SB₂ von diesem. Es steuert dabei z.B. die mit dem Bedienteil 61 verbundenen Anzeigen 56 und 57 an. Mittels des Bedienschalters 58 kann über das Bedienteil 61 auf Testbetrieb umgeschaltet werden, wobei eine ensprechende Meldung dem Steuerteil 60 zugeführt wird. Über die Datenverbindung 62 sendet das Steuerteil 60 ebenso Steuersignale SL₁ an das Leistungsteil 39 und empfängt Rückmeldungen SL₂ von diesem. Die Rückmeldungen SB₂, SL₂ , S₂ und/oder S'₂ werden im Steuerteil 60 verarbeitet oder vorverarbeitet.

Das Steuerteil 60 umfaßt vorzugsweise einen Prozessor mit einem Speicher (RAM, EPROM), der vor Ort anwenderspezifisch parametriert oder programmiert werden kann. Die Funktionalität des Steuerteils 60 entspricht beispielsweise der eines Schützes. Analog ist die Funktionalität eines herkömmlichen Leistungsschalters, z. B. dessen Kontaktelemente, im Leistungsteil 59 realisiert. Das Bedienteil 61 würde dann den mechanischen Schalterteil des Leistungsschalters enthalten.

In dem Abzweiggehäuse 51 des Verbraucherabzweigs 5 ist somit die gesamte Funktionalität eines herkömmlichen Schaltgerätes inklusive der erforderlichen Kommunikations- und Steuerelektronik integriert. Ebenso sind alle Verbindungen zwischen den einzelnen Bestandteilen oder Schaltgliedern des Schaltgerätes bereits innerhalb des Abzweiggehäuses 51 hergestellt. Über den internen Datenbus 67 kann die Programmierung vom übergeordneten Steuersystem erfolgen, z.B. durch Vorgabe eines Stromwertes für eine Kurzschlußabschaltung oder durch Eingabe von Kurzschlußkennlinien. Der bereits alle erforderlichen Funktionen beinhaltende Verbraucherabzweig 5 ist somit gegebenenfalls vor Ort lediglich zu programmieren und über den Leistungsabgang 65 sowie die Signalschnittstelle 54 mit dem jeweiligen Verbraucher zu verbinden. Die verbraucherspezifisch Bestückung des Verbraucherabzweigs 5 kann somit bereits bei der Herstellung erfolgen, so daß ein hoher Vorfertigungsgrad erzielt wird.

## Patentansprüche

1. Verbraucherabzweig für ein Sammelschienensystem (1) zum Anschluß einer Anzahl von elektrischen Geräten, insbesondere von Niederspannungsschaltgeräten, wobei das Sammelschienensystem ein kanalartiges Kammersystem (12) zur Aufnahme von ersten Leiterschienen (2) zur Energieübertragung und zur Aufnahme von zweiten Leiterschienen (3) zur Hilfsenergieübertragung sowie zur Aufnahme eines Leiterelements (4) zur Kommunikationsübertragung aufweist, wobei innerhalb desselben Abzweiggehäuses (51) des Verbraucherabzweigs (5) ein mit den ersten Leiterschienen (2) kontaktierbares Leistungsteil (59) und ein mit den zweiten Leiterschienen (3) sowie mit dem Leiterelement (4) kontaktierbares Steuerteil (60) vorgesehen sind.

2. Verbraucherabzweig nach Anspruch 1, **dadurch gekennzeichnet, daß** das Steuerteil (60) eine erste Datenverbindundung (62) zum Leistungsteil (59) und eine zweite Datenverbindung (63) zu einem innerhalb des Abzweiggehäuses (51) vorgesehenen Bedienteil (61) aufweist.

3. Verbraucherabzweig nach Anspruch 1 oder 2, **dadurch gekennzeichnet, daß** das Steuerteil (60) ausgangsseitig eine Signalschnittstelle (68) aufweist.

4. Verbraucherabzweig nach einem der Ansprüche 1 bis 3, **dadurch gekennzeichnet, daß** das Steuerteil (60) eine Verbindung (66a) zur Hilfsenergieübertragung zum Leistungsteil (59) aufweist.

5. Verbraucherabzweig nach einem der Ansprüche 2 bis 4, **dadurch gekennzeichnet, daß** das Steuerteil (60) eine Verbindung (66b) zur Hilfsenergieübertragung zum Bedienteil (61) aufweist.

## Claims

1. Load feeder for a busbar system (1) for connecting a number of electrical devices, especially low-voltage switching devices, in which case the busbar system features a channel-type chamber system (12) for accommodating first busses (2) for energy transmission and for accommodating second busses (3) for auxiliary energy transmission, as well as for accommodating a conductor element (4) for communication transmission, in which case a power section (59) able to be contacted with the first busses (2) and also a control section (60) able to be contacted with the second busses (3) as well as with the conductor element (4) are provided within the same feeder housing (51) of the load feeder (5).

2. Load feeder in accordance with claim 1,
**characterized in that** the control section (60) has a first data connection (62) to the power section (59) and a second data connection (63) to an operating section (61) provided within the feeder housing (51).

3. Load feeder in accordance with claim 1 or 2,
**characterized in that** the control section (60) features a signal interface (68) on its output side.

4. Load feeder in accordance with one of the claims 1 to 3,
**characterized in that** the control section (60) has a connection (66a) for auxiliary energy transmission to the power section (59).

5. Load feeder in accordance with one of the claims 2 to 4,
**characterized in that** the control section (60) has a connection (66b) for transmission of auxiliary energy to the operating section (61).

## Revendications

1. Dérivation de consommateur pour un système de barres collectrices (1) en vue du raccordement d'un certain nombre d'appareils électriques, notamment d'appareils de distribution à basse tension, telle que le système de barres collectrices comporte un système de chambre du type canal (12) pour le logement de premières barres conductrices (2) destinées à la transmission d'énergie et pour le logement de deuxièmes barres conductrices (3) destinées à la transmission d'énergie auxiliaire ainsi que pour le logement d'un élément conducteur (4) destiné à la transmission de communication et telle que, à l'intérieur du même boîtier de dérivation (51) de la dérivation de consommateur (5), il est prévu une partie de puissance (59) pouvant être mise en contact avec les premières barres conductrices (2) et une partie de commande (60) pouvant être mise en contact avec les deuxièmes barres conductrices (3) ainsi qu'avec l'élément conducteur (4).

2. Dérivation de consommateur selon la revendication 1, **caractérisée par le fait que** la partie de commande (60) comporte une première liaison de données (62) vers la partie de puissance (59) et une deuxième liaison de données (63) vers une partie de contrôle (61) prévue à l'intérieur du boîtier de dérivation (51).

3. Dérivation de consommateur selon la revendication 1 ou 2, **caractérisée par le fait que** la partie de commande (60) comporte côté sortie une interface de signal (68).

4. Dérivation de consommateur selon l'une des revendications 1 à 3, **caractérisée par le fait que** la partie de commande (60) comporte une liaison (66a) pour la transmission d'énergie auxiliaire vers la partie de puissance (59).

5. Dérivation de consommateur selon l'une des revendications 2 à 4, **caractérisée par le fait que** la partie de commande (60) comporte une liaison (66b) pour la transmission d'énergie auxiliaire vers la partie de contrôle (61) .
